# EUROPEAN PATENT SPECIFICATION

(11) **EP 2 781 412 B1**
(45) Date of publication and mention of the grant of the patent: **13.01.2016**
(21) Application number: 14160320.9
(22) Date of filing: 17.03.2014
(51) Int. Cl.: B60R 16/04, H01M 2/10

(54) **Vehicle battery fixing structure**
Fahrzeugbatteriebefestigungsstruktur
Structure de fixation de batterie de véhicule

(30) Priority: 18.03.2013 JP 2013055326; 18.03.2013 JP 2013055327
(43) Date of publication of application: 24.09.2014
(73) Proprietor: Mitsubishi Jidosha Kogyo K.K., Tokyo 108-8410 (JP); Mitsubishi Jidosha Engineering K.K., Aichi 444-8501 (JP)
(72) Inventor: Kono, Koichi, Tokyo 108-8410 (JP); Minoda, Takeshi, Okazaki-shi, Aichi 444-8501 (JP)
(74) Representative: Vossius & Partner Patentanwälte Rechtsanwälte mbB

(56) References cited:
- JP-A- H08 329 917
- JP-U- S60 138 263
- US-A1- 2005 224 683
- US-B2- 8 122 989

## Description

### Technical Field

The present invention relates to a vehicle with a vehicle battery fixing structure by means of which two batteries are fixed side by side.

### Background Art

As illustrated in Fig. 6, Japanese Patent No. 3144295describes a vehicle battery fixing structure in which two batteries 102 and 103 are fixed side by side. In this fixing structure, a plate-shaped bracket 181 shared by two batteries 102 and 103 is fixed to a corrugated recess formed in a battery pan 104, and the two batteries 102 and 103 are mounted, while being displaced from each other, in such a way that one battery is on one side of the plate-shaped bracket 181 and the other battery is on the other side of the same. Two engagement holes 181 a and 181 b are opened side by side in an upper end of the shared, plate-shaped bracket 181. One end of a holder 182 that transversely extends across a top surface of the first battery 102 is engaged with the engagement hole 181 a, and one end of a holder 183 that transversely extends across a top surface of the second battery 103 is engaged with the other engagement hole 181b. In addition, a hole 182a is opened in the other end of the holder 182, and a hole 183a is opened in the other end of the holder 183. An L bolt 184 with its one end 184a secured to the battery pan 104 is inserted into the hole 182a, and an L bolt 185 with its one end 185a secured to the battery pan 104 is inserted into the hole 183a. A male thread 184b formed at the other end of the L bolt 184 and a male thread 185b formed at the other end of the L bolt 185 are fastened with nuts. The first battery 102 is thereby fixed to one side of the shared, plate-shaped bracket 181, and the second battery 103 is thereby fixed to the other side of the same. As a result, the one end 184a of the L bolt 184 for fixing the first battery 102 serves as a vibration input point by way of which engine vibrations enter the first battery 102. The one end 185a of the L bolt 185 for fixing the second battery 103 serves as a vibration input point by way of which engine vibrations enter the second battery 103.

As illustrated in Fig. 7, Japanese Patent No. 4683309describes a vehicle battery fixing structure in which a first battery 1102 and a second battery 1103 are fixed side by side to an automobile engine room along a front-back direction of the automobile. In the fixing structure, a plus terminal 1121 provided on a top surface of the first battery 1102 is positioned toward a center side in a widthwise direction of the vehicle, and a plus terminal 1131 provided on a top surface of the second battery 1103 is positioned in proximity to the plus terminal 1121 of the first battery 1102. US 8,122,989 B2 relates to a battery box system and method for mounting a battery box within a vehicle. The system includes a battery box that is mounted between two chassis frame members that extend lengthwise along the vehicle. The battery box is supported on the frame member via a plurality of bracket members.

### Summary of Invention

### Technical Problem

However, in the vehicle battery fixing structure described in Japanese Patent No. 3144295, the vibration input point for the first battery and the vibration input point for the second battery are separate from each other. Accordingly, vibrations, like engine vibrations, travel to the first battery and the second battery in different ways. As a result, the first battery and the second battery significantly vibrate in some cases.

It is therefore one advantageous aspect of the present invention to provide a vehicle battery fixing structure by means of which two batteries are mounted side by side and that can prevent shaking of the two batteries, which would otherwise occur when vibrations, such as engine vibrations, travel to the first battery and the second battery in different ways.

In relation to the vehicle battery fixing structure described in Japanese Patent No. 4683309, after an automobile comes into collision, the first battery 1102 might run on the second battery 1103; the plus terminal 1121 of the first battery 1102 might contact a minus terminal 1132 of the second battery 1103; and a minus terminal 1122 of the first battery 1102 might contact the plus terminal 1131 of the second battery 1103.

However, since both the minus terminal 1122 of the battery 1102 and the minus terminal 1132 of the second battery 110 are connected to a vehicle body, a short-circuit might arise even when the plus terminal of one battery contacts the minus terminal of the other battery.

### Solution to Problem

The above problem is solved by a vehicle comprising two batteries and a vehicle battery fixing structure as defined in the claims.

According to one aspect of the invention, there is provided a vehicle according to claim 1.

According to the present invention, the insert part provided between the top surface of the battery pan and the bottom surface of the first battery serves as a vibration input point for the second battery. Hence, vibrations, such as engine vibrations, travel to both the first battery and the second battery in nearly the same manner. This can prevent shaking of the two batteries, which would otherwise occur when vibrations like engine vibrations travel to the first battery and the second battery.

In addition, since the entire back surface of the second battery on the front side of the vehicle is covered with the battery bracket, the battery bracket will partition the second battery from the first battery even if the automobile undergoes head-on collision, so that impacts on the first battery can be lessened.

A weight of the second battery may be lighter than a weight of the first battery.

This makes a vibration characteristic of the second battery different from a vibration characteristic of the first battery, which causes a discrepancy between resonance points of the batteries, so that occurrence of shaking of the two batteries is prevented.

The battery pan may include:
a battery mounting part on which the first battery is mounted; and
a bracket fixing part that is disposed lower than the battery mounting part and to which the battery bracket is fixed.

As a result of this, the first battery is fixed on the battery mounting part, and the battery bracket is fixed to the bracket fixing part, so that the first battery and the second battery can be intensively attached.

The battery pan may include a receiving part that is disposed lower than the bracket fixing part and that receives a lower end part of the second battery.

As a result of this, the lower end of the second battery on the front side of the vehicle is received by the receiving part that is lower than the bracket fixing part. Hence, the top surface of the second battery can be made low, which makes it easy to fix the battery to an automobile having a forwardly down-sloped engine hood.

The vehicle battery fixing structure may comprise a bracket placed at a right angle to the battery bracket.

The bracket may include:
a fixing part that is fixed to the top surface of the battery pan and that is provided between the top surface of the battery pan and the bottom surface of the first battery; and
a support part that is joined to a flange provided on the battery bracket to support the battery bracket.

As a result of this, the fixing part of the bracket placed at a right angle to the battery bracket is provided between the top surface of the battery pan and the bottom surface of the first battery. The support part of the bracket is joined to the flange provided on the battery bracket, to thus support the battery bracket. Accordingly, rigidity of the battery bracket can be enhanced.

The bracket may be a relay bracket which is attached with a switching relay configured to open and close a connection of the first battery and configured to open and close a connection of the second battery.

As a result of this, the relay bracket supports the battery bracket.

The vehicle battery fixing structure may further comprise a harness bracket which includes a fixing part fixed to the top surface of the battery pan and provided between the top surface of the battery pan and the bottom surface of the first battery.

As a result of this, the harness bracket can be intensively fixed to the battery pan.

The vehicle battery fixing structure may be configured such that:
a minus terminal and a plus terminal of the first battery are laid rightward or leftward on the top surface of the first battery with respect to a center line of a vehicle in a widthwise direction of the vehicle;
the plus terminal of the first battery is placed close to the center line than is the minus terminal of the first battery in the widthwise direction;
lateral surfaces of the second battery are placed rightward or leftward with respect to the center line of the vehicle; and
a minus terminal and a plus terminal of the second battery are placed on one of the lateral surfaces of the second battery disposed at a side of the center line in the widthwise direction.

The plus terminal of the second battery may be provided in an upper portion of the one of the lateral surface disposed at the side of the center line in the widthwise direction.

The switching relay may be fixed to a position between the first battery and the second battery.

### Advantageous Effects of Invention

According to the invention, the battery bracket whose insertion part is provided between the top surface of the battery pan and the bottom surface of the first battery serves as a vibration input point for the second battery. Hence, vibrations, such as engine vibrations, travel to both the first battery and the second battery in nearly the same way. This can prevent shaking of the two batteries, which would otherwise be caused when, vibrations, such as engine vibrations, travel to the first battery and the second battery in different ways.

### Brief Description of Drawings

Fig. 1 is a plan view illustrating a main battery and a sub-battery fixed in an automobile engine room;
Fig. 2 is a plan view illustrating a state of the engine room illustrated in Fig. 1 from which the main battery and the sub-battery are removed;
Fig. 3 is a perspective view of the vehicle battery fixing structure of the embodiment when viewed from a front of a vehicle;
Fig. 4 is a cross sectional view taken along line IV-IV illustrated in Fig. 3;
Fig. 5 is an exploded perspective view for illustrating the vehicle battery fixing structure illustrated in Fig. 3;

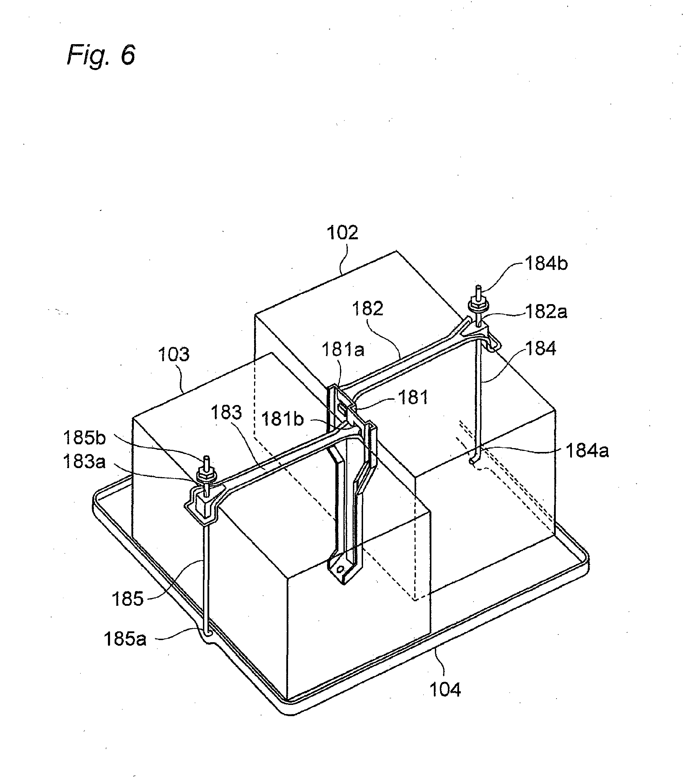

Fig. 6 is a perspective view illustrating a related-art vehicle battery fixing structure; and

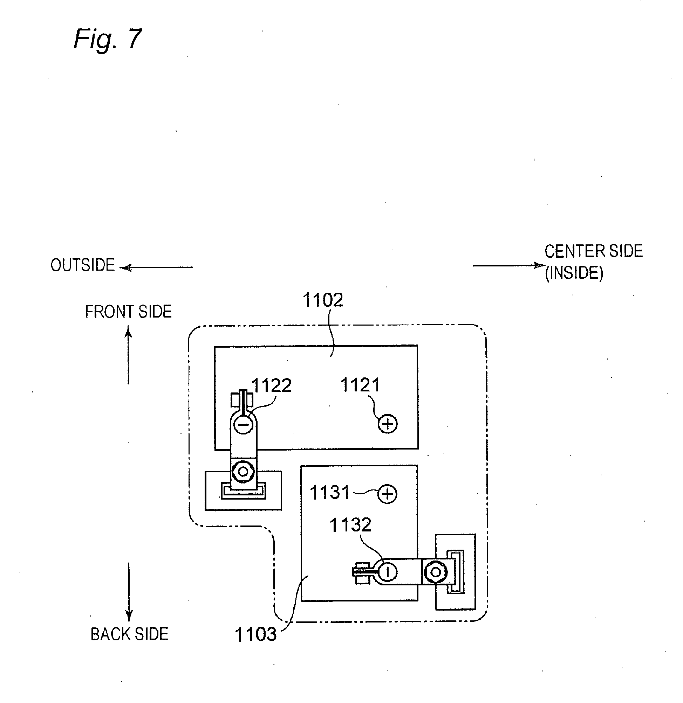

Fig. 7 is a plan view illustrating another related-art vehicle battery fixing structure.

### Description of Embodiments

An embodiment of the invention is hereunder described in detail. The embodiment to be described hereunder shall not unduly limit specifics of the present invention described in the claims, and not all constituents to be described in connection with the embodiment are indispensable as means for resolution of the present invention.

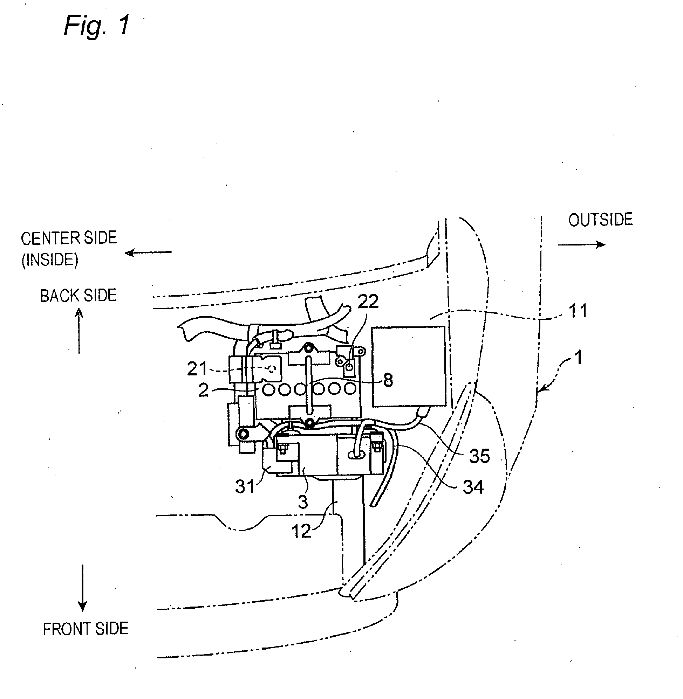

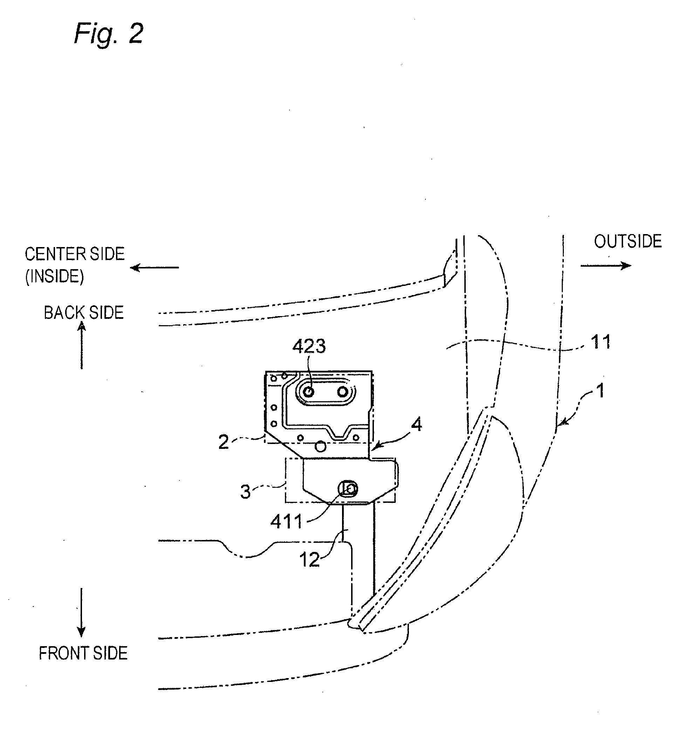

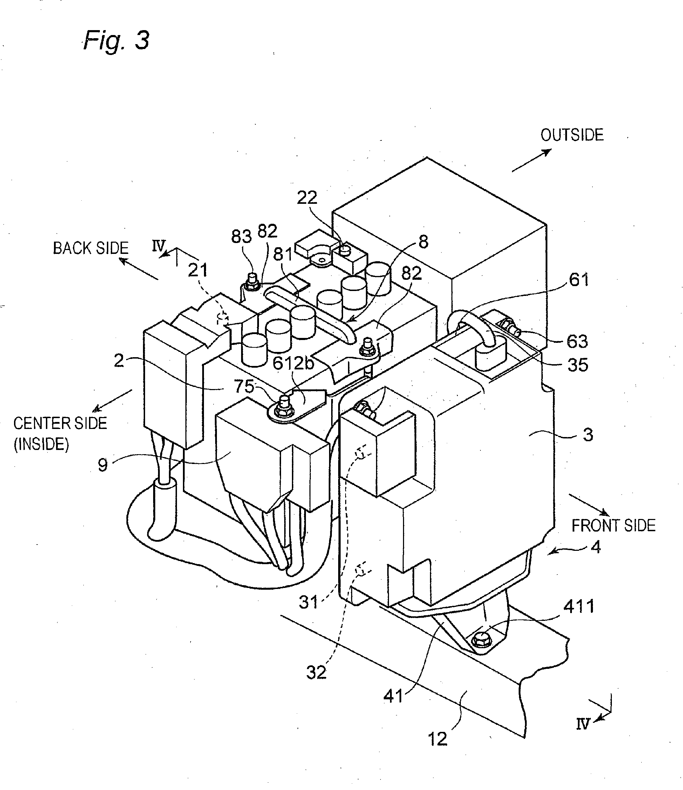

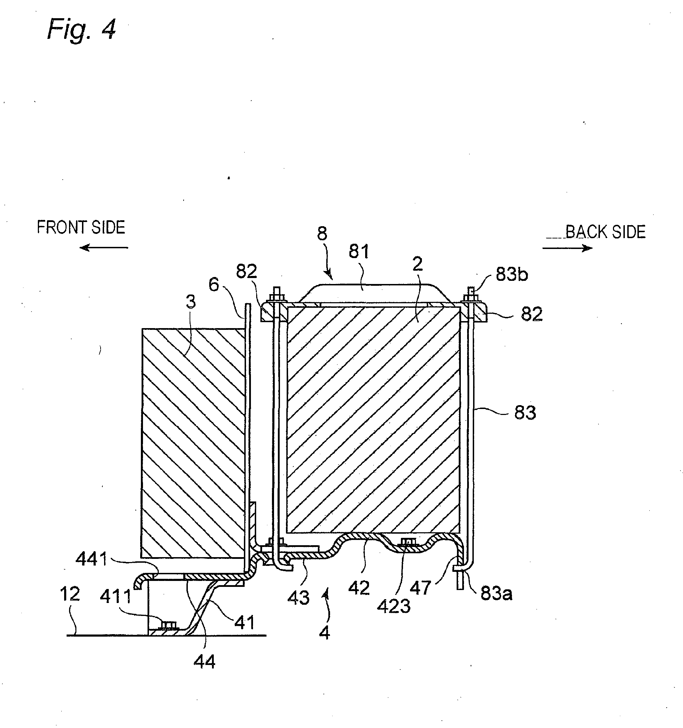

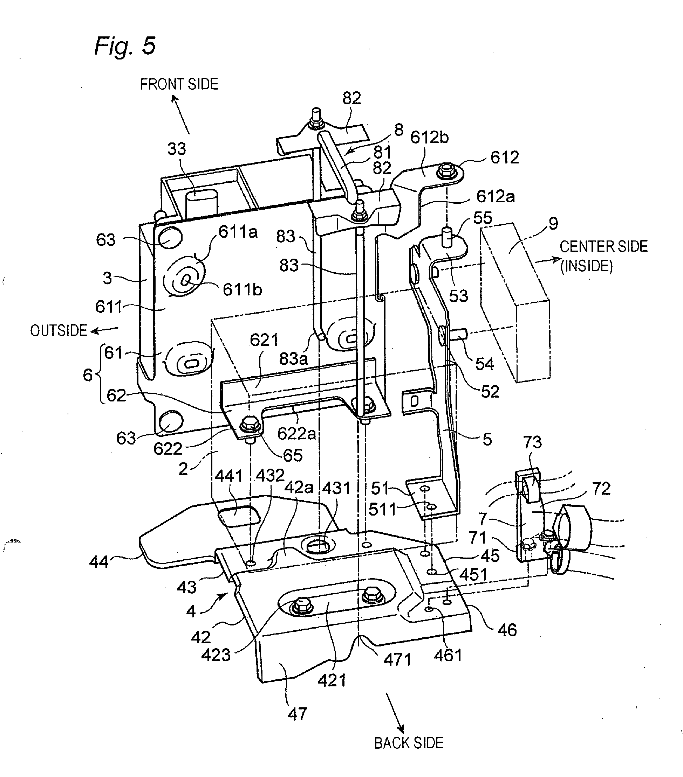

Fig. 1 is a plan view illustrating a main battery and a sub-battery fixed in an automobile engine room, and Fig. 2 is a plan view illustrating a state of the engine room illustrated in Fig. 1 from which the main battery and the sub-battery are removed. Fig. 3 is a perspective view of the vehicle battery fixing structure of the embodiment when viewed from a front of a vehicle, and Fig. 4 is a cross sectional view taken along line IV-IV illustrated in Fig. 3. Fig. 5 is an exploded perspective view for illustrating the vehicle battery fixing structure illustrated in Fig. 3. The main battery and the sub-battery are illustrated in a virtual line (a chain double-dashed line) in Fig. 2, and the main battery and a switching relay are illustrated in a virtual line (a chain double-dashed line) in Fig. 5.

As illustrated in Fig. 1, the vehicle battery fixing structure of the embodiment is for mounting the main battery 2 and the sub-battery 3 in an engine room 11 of an automobile 1 and placed on a side member 12.

The side member 12 makes up a vehicle body constituent of the invention. As illustrated in Fig. 2, the side member 12 is disposed in the engine room 11 and extends along a front-back direction of the vehicle.

As illustrated in Fig. 5, the vehicle battery fixing structure of the embodiment is for mounting the main batter 2 and the sub-battery 3 on a single battery pan 4 and includes the battery pan 4, a relay bracket 5, a battery bracket 6, a harness bracket 7, and a battery holder 8.

As illustrated in Fig. 3, the battery pan 4 is fixed to the side member 12 by means of side pan fixing fitting 41 bonded (welded) to the bottom surface of the battery pan 4 and a fixing part 421 to be described later (see Fig. 5).

As illustrated in Fig. 5, the battery pan 4 is formed into a stair-like shape that becomes gradually lower from a back side to a front side of the vehicle by means of machining a plate-shaped metallic element. The battery pan 4 is provided with a battery mounting part 42, a sub-battery fixing part 43, and a sub-battery receiving part 44 in such a way that a top surface of the battery pan 4 becomes gradually lower from the back side to the front side of the vehicle. In addition, a relay fixing part 45 whose top surface is flush with a top surface of the sub-battery fixing part 43 is provided at an inner position on the battery mounting part 42 of the battery pan 4 in a widthwise direction of the vehicle. Therefore, the top surface of the relay fixing part 45 makes up the same plane where the top surface of the sub-battery fixing part 43 lies. Further, the battery pan 4 is also provided with a harness fixing part 46 that is situated on an inside with respect to the battery mounting part 42 in the widthwise direction of the vehicle and on a back side of the vehicle with respect to the relay fixing part 45. The harness fixing part 46 also has a top surface that is lower than the top surface of the battery mounting part 42 and that is higher than the top surface of the relay fixing part 45.

The battery mounting part 42 is an area where the main battery 2 is to be mounted and formed into a nearly rectangular shape when viewed from above. A portion 42a situated outwardly in the widthwise direction of the vehicle juts out toward the front side of the vehicle. A downwardly-bulging fixing part 421 is provided nearly in the center of the battery mounting part 42. As mentioned above, the fixing part 421 is for mounting the battery pan 4 to the side member 12 and formed into a circular shape that is elongated in the widthwise direction of the vehicle. Fixing holes, one on an outer side and the other on an inside in the widthwise direction of the vehicle, are opened in the fixing part 421. The battery pan 4 is fixed to the side member 12 by means of bolts 423 inserted into the respective fixing holes.

Moreover, a back plate part 47 is provided in the battery mounting part 42 and on the back side of the vehicle. The back plate part 47 downwardly extends from a back edge of the battery mounting part 42, and an engagement part 471 is provided at a nearly midway position on the back plate part 47 in the widthwise direction of the vehicle. The engagement part 47 is a cutout recess that is formed in a lower edge of the back plate part 47. One folded end 83a of an L bolt 83 to be described later is engaged with the engagement part 471.

The sub-battery fixing part 43 is an area used for fixing the battery bracket 6 to which the sub-battery 3 is attached. The sub-battery fixing part 43 has a width enough for mounting the battery bracket 6 in the front-back direction of the vehicle. An engagement part 431 is provided nearly at a midway position of the sub-battery fixing part 43 in the widthwise direction of the vehicle. The engagement part 431 is formed from an opening that downwardly bulges from the sub-battery fixing part 43 and that is formed nearly in the center of the sub-battery fixing part 43. The folded end 83a of the L bolt 83 to be described later is engaged with the engagement part 431. A fixing hole 432 for fixing the battery bracket 6 is opened in each of two locations on the sub-battery fixing part 43, one on the outside and the other on the inside with respect to the widthwise direction of the vehicle.

The sub-battery receiving part 44 is an area for receiving a lower end of the sub-battery 3 and has nearly the same width as that of the sub-battery 3 in the front-back direction of the vehicle. As illustrated in Fig. 4, the side member attaching fitting 41 is bonded (welded) to the bottom surface of the sub-battery receiving part 44. As mentioned above, the side member fixing fitting 41 is for mounting the battery pan 4 to the side member 12. The side member fixing fitting 41 is fixed to the side member 12 by means of a bolt 411 inserted through the side member fixing fitting 41. Further, as illustrated in Fig. 5, a tool insert hole 441 is opened in a front center of the sub-battery receiving part 44 in the widthwise direction of the vehicle. The tool insert hole 441 is an opening for insertion of a tool that fastens a bolt 441 used for attaching the battery pan 4 (side member fixing fitting 41) to the side member 12. The tool insert hole 441 is provided at a position corresponding to the position of the bolt 411 that penetrates through the side member fixing fitting 41.

The relay fixing part 45 is an area for mounting the relay bracket 5 to which a switching relay 9 is fixed, and has, in the widthwise direction of the vehicle, a width enough for fixing the relay bracket 5. Fixing holes 451 for mounting the relay bracket 5 are opened in the relay fixing part 45. The fixing holes 451 are provided one on the front side and the other on the back side in the front-back direction of the vehicle.

The harness fixing part 46 is an area for fixing the harness bracket 7 to which a harness is to be fixed. The harness fixing part 46 has a width enough for fixing the harness bracket 7 in both the widthwise direction and the front-back direction of the vehicle. Fixing holes 461 for fixing the harness bracket 7 are opened in the harness fixing part 46. The fixing holes 461 are provided, one on the inside and the other on a slightly forward outside in the widthwise direction.

As illustrated in Fig. 5, the relay bracket 5 is fixed to the relay fixing part 45. The relay bracket 5 is made by machining a sheet-shaped metal element and has a fixing part 51, an upright part 52, and a support part 53. The fixing part 51 is an area to be fixed to the battery pan 4, and a pair of fixing holes 511 are opened in the fixing part 51 along the front-back direction of the vehicle. Bolts (not shown) inserted into the respective fixing holes 511 are screw-engaged with the respective fixing holes 451, whereby the relay bracket 5 is fixed to the battery pan 4.

The upright part 52 is situated at a right angle to the fixing part 51. A pair of fixing holes are opened in an upper end of the upright part 52 along the front-back direction of the vehicle. The fixing holes are for fixing the switching relay 9 and situated at positions corresponding to the respective fixing holes opened in the switching relay 9. Bolts 54 inserted in the fixing holes of the relay bracket 5 and the fixing holes of the switching relay 9 are fastened with nuts, whereby the switching relay 9 is fixed to the relay bracket 5. The support part 53 is situated at a right angle to the upright part 52 and horizontally extends toward the inside of the vehicle along its widthwise direction.

As illustrated in Figs. 4 and 5, the battery bracket 6 provided with the sub-battery 3 is fixed to the sub-battery fixing part 43.

The sub-battery 3 makes up a second battery of the invention and serves as a power source that feeds electric power principally for an interior. In the embodiment, a battery whose material is different from a material of the main battery 2, such as a nickel-metal hydride battery and a lithium ion battery, is used for the sub-battery 3. This makes it possible to make a resonance point of the main battery 2 different from a resonance point of the sub-battery 3. In addition, more preferably, a vibration characteristic of the main battery 2 and a vibration characteristic of the sub-battery 3 are set to vibration characteristics that cancel each other. The sub-battery 3 is made up of a rectangular parallelepiped that assumes an rectangular shape when viewed from above. A plus terminal 31 and a minus terminal 32 (see Fig. 3) are provided on a lateral surface of the sub-battery 32. The plus terminal 31 and the minus terminal 32 are placed at a center on the lateral surface with respect to its lateral direction and disposed, while being spaced apart from each other, on both sides with respect to its longitudinal direction.

As illustrated in Fig. 3, in the embodiment, a battery, such as that will be described below, is used for the sub-battery 3. Specifically, when a rectangular top surface of the battery is fixed while a longitudinal direction of the top surface is aligned to the widthwise direction of the vehicle, the plus terminal 31 and the minus terminal 32 are situated on the center side (the inside) with respect to the widthwise direction of the vehicle. The plus terminal 31 is situated at an upper position, and the minus terminal 32 is situated at a lower position. In addition, in the embodiment, the plus terminal 31 of the sub-battery 3 is covered with a terminal cover, thereby preventing occurrence of a short-circuit accident. As illustrated in Fig. 5, in the embodiment, a connector terminal 33 is provided on a rectangular top surface of the sub-battery 3.

As illustrated in Fig. 5, the battery bracket 6 is made by bonding (welding) a stationary plate 62 to a base plate 61.

The base plate 61 is made by machining a plate-shaped metal element and has a plate-shaped part 611 and a flange 612. The plate-shaped part 611 is an area for fixing the sub-battery 3 and is large enough to cover the back surface of the sub-battery 3 on the back side of the vehicle.

The plate-shaped part 611 is formed into a rectangular shape, and fixing holes are opened in four corners, respectively. The fixing holes are for fixing the sub-battery 3 and provided in positions that correspond to the respective 4 fixing holes opened in the respective four corners of the sub-battery 3. Bolts 63 inserted into the fixing holes of the base plate 61 and the fixing holes of the sub-battery 3 are screw-engaged with nuts (see Fig. 3), whereby the sub-battery 3 is fixed to the base plate 61.

A plurality of harness fixing parts 611 a are opened in arbitrary positions on the plate-shaped part 611. The harness fixing parts 611 a are for mounting a harnesses to be used for feeding a power supply or signal communication and placed at arbitrary positions. The harness fixing parts 611 a are provided in hemispheric shapes that bulge toward the back side of the vehicle. A fixing hole 611 b for fixing a harness clip is opened in a top surface of each of the harness fixing parts 611a. In the embodiment, there are provided the harness fixing parts 611 a for fixing a minus harness 34 (see Fig. 1) connected to the minus terminal 32 of the sub-battery 3 and a control harness 35 to be connected to the connection terminal 33 of the sub-battery 3 (see Fig. 1 and Fig. 3).

A flange 612 is an area that is supported by the relay bracket 5 and placed at an upper end of the plate-shaped part 611 inwardly with respect to the widthwise direction of the vehicle and also oriented toward the relay bracket 5. The flange 612 has a vertical portion 612a that extends toward the relay bracket 5 from the upper end of the plate-shaped part 611 situated inside with respect to the widthwise direction of the vehicle and a horizontal portion 612a that horizontally extends from an upper end of the vertical portion 612a to the inside with respect to the widthwise direction of the vehicle. A support hole is opened in the horizontal portion 612b, and a weld bolt 55 provided on the relay bracket 5 is inserted into the support hole and fastened with a nut.

The stationary plate 62 is made by machining a plate-shaped metal element and has a bonded part 621 and a fixing part 622. The bonded part 621 is an area bonded (welded) to the base plate 61, and the fixing part (an insert part) 622 is situated at a right angle to the bonded part 621. The fixing part 622 is an area fixed to the battery pan 4 (a sub-battery fixing part 43), and a concave part 622a that opens toward the back side of the vehicle is formed in a midway point on the fixing part 622 in the widthwise direction of the vehicle. When the battery bracket 6 (the stationary plate 62) is fixed to the battery pan 4 (a sub-battery fixing part 43), the concave part 622a makes exposed a portion 42a that bulges toward the front of the vehicle and that is situated closer to the outside of the battery mounting part 42 in the widthwise direction of the vehicle and an engagement part 431 provided in the sub-battery fixing part 43. A fixing hole is provided at an inside and an outside of the concave part 622a with respect to the widthwise direction of the vehicle. Bolts 65 inserted into the respective fixing holes are screw-engaged with respective fixing holes 432 opened in the sub-battery fixing part 43, whereby the battery bracket 6 to which the sub-battery 3 is fixed is secured to the battery pan 4.

The harness bracket 7 is fixed to the harness fixing part 46. The harness bracket 7 is made by machining a plate-shaped metal element and has a fixing part 71 and an upright part 72. The fixing part 71 is an area to be fixed to the battery pan 4, and a pair of fixing holes are opened in the fixing part 71. Bolts inserted into the respective fixing holes are screw-engaged with the respective fixing holes 461 opened in the harness fixing part 46, whereby the harness bracket 7 is fixed to the battery pan 4. The upright part 72 is located at a right angle to the fixing part 71. A harness clip 73 can be fixed to the upright 72.

As illustrated in Figs. 4 and 5, the main battery 2 is fixed to the battery mounting part 42 by means of the battery holder 8.

The main battery 2 makes up the first battery of the invention and serves as a power source principally at start-up of the engine. In the embodiment, a lead battery is used for the main battery 2. The main battery 2 is made up of a rectangular parallelepiped that is rectangular when viewed from above, and a plus terminal 21 and a minus terminal 22 are provided on a rectangular top surface. The plus terminal 21 and the minus terminal 22 are located on one side of the rectangular top surface with respect to the lateral direction and located on both sides, while spaced apart from each other, in the longitudinal direction.

As illustrated in Fig. 3, a battery to be described below is employed as the main battery 2 in the embodiment. Namely, when the rectangular top surface of the battery is fixed while the longitudinal direction of the top surface is aligned to the widthwise direction of the vehicle, the plus terminal 21 and the minus terminal 22 are slanted to the back side of the vehicle. Further, the plus terminal 21 is situated on the center side (the inside) with respect to the widthwise direction of the vehicle, and the minus terminal 22 is situated outside with respect to the widthwise direction of the vehicle. In the embodiment, the plus terminal 21 of the main battery 2 is covered with a terminal cover, thereby preventing occurrence of a short-circuit accident.

The battery holder 8 is made up of a holder 81 and two L bolts 83. The holder 81 is situated so as to cut across a longitudinal center of the top surface of the main battery 2. Guides 82 are provided along corners of the main battery 2 such that one guide is situated at one end of the holder 81 and that the other guide is placed on the other end of the holder 81. A through hole through which the L bolt 83 passes is opened in each of the guides 82. The L bolts 83 are for fixing the main battery 2 between the battery pan 4 and the holder 81. One end 83a of the bolt 83 is bent at a right angle, and a male thread is formed on another end 83b of the same. The bent ends are engaged with the respective engagement parts 471 and 431, and the other ends 83b passed through the respective guides 82 are secured with nuts, whereby the main battery 2 is fixedly positioned between the battery pan 4 and the holder 81.

In the above vehicle battery fixing structure, the battery bracket 6 is placed on a back surface of the sub-battery 3 situated beside the portion of the main battery 2 that is on the front side of the vehicle, so as to cover the entirety of the back surface. The fixing part 622 (the insert part) of the stationary plate 62 bonded to the battery bracket 6 is fixed to a top surface of the sub-battery fixing part 43 (the battery pan 4), to thus become provided between the top surface of the battery pan 4 and an bottom surface of the main battery 2.

Likewise, the fixing part 51 of the relay bracket 5 is fixed to a top surface of the relay fixing part 45 (the battery pan 4), to thus become provided between the top surface of the battery pan 4 and the bottom surface of the main battery 2. The fixing part 71 of the harness bracket 7 is fixed to a top surface of the harness fixing part 46 (the battery pan 4), to thus become provided between the top surface of the battery pan 4 and the bottom surface of the main battery 2.

In the vehicle battery fixing structure of the embodiment, the battery bracket 6 (the stationary plate 62) provided between the top surface of the battery pan 4 (the sub-battery fixing part 43) and the bottom surface of the main battery 2 serves as a vibration input point by way of which vibrations, such as engine vibrations, enter the sub-battery 3. Therefore, vibrations entering the main battery 2 and vibrations entering the sub-battery 3 become nearly equal to each other. This makes it possible to prevent the two batteries 2 and 3 from undergoing different kinds of vibrations, which would otherwise occur when the vibrations entering the main battery 2 differ from the vibrations entering the sub-batter 3.

The sub-battery 3 on the front side of the vehicle is covered with the battery bracket 6 (the base plate 61). Hence, even if an automobile undergoes head-on collision, the battery bracket 6 will partition the sub-battery 3 from the main battery 2, so that impacts on the main battery 2 can be lessened.

Further, a vibration characteristic of the main battery 2 is different from a vibration characteristic of the sub-battery 3. Hence, greater vibrations, which would otherwise be caused by resonance of the two batteries, can be prevented.

Further, the main battery 2 is mounted on the battery mounting part 42, and the battery bracket 6 (the stationary plate 62) is fixed to the sub-battery fixing part 43. Hence, the main battery 2 and the sub-battery 3 can be intensively fixed.

The lower end of the sub-battery 3 on the front side of the vehicle is received by the sub-battery receiving part 44 that is lower than the sub-battery fixing part 43. Accordingly, the top surface of the sub-battery 3 can be made lower, which makes it easy to fix the battery to an automobile with a forwardly down-sloped engine hood.

The fixing part 51 of the relay bracket 5 placed at a right angle to the battery bracket 6 is provided between the top surface of the battery pan 4 (the relay fixing part 45) and the bottom surface of the main battery 2. The support part 53 of the relay bracket 5 supports the battery bracket 6 (the flange 612). Hence, rigidity of the battery bracket 6 can be enhanced.

Moreover, the main battery 2 is mounted on the battery mounting part 42, and the harness bracket 7 is fixed to the harness fixing part 46. Accordingly, the harness bracket 7 can be intensively fixed to the battery pan 4.

In the vehicle battery fixing structure of the embodiment, the plus terminal 21 of the main battery 2 and the plus terminal 31 of the sub-battery 3 are situated on the center side with respect to the widthwise direction of the vehicle. Accordingly, even if the automobile undergoes lateral collision, a possibility of the plus terminals 21 and 31 contacting the vehicle body can be reduced. In addition, the plus terminal 21 of the main battery 2 is provided on the top surface of the battery, and the plus terminal 31 of the sub-battery 3 is provided on the lateral surface of the battery. Therefore, the plus terminal 21 of the main battery 2 and the plus terminal of the sub-battery are oriented in different directions. Even if the sub-battery 3 runs over the main battery 2, a possibility of the plus terminal 31 of the sub-battery 3 contacting the minus terminal 22 of the main battery 2 is small, and a possibility of the minus terminal 32 of the sub-battery 3 contacting the plus terminal 21 of the main battery 2 is small. The possibility of occurrence of a short-circuit accident of the batteries, which would occur at the time of collision of the automobile, can thereby be reduced.

Since the plus terminal 31 is provided at an upper position on the lateral surface of the sub-battery 3, the plus terminal 31 of the sub-battery 3 becomes distant from the vehicle body. The possibility of occurrence of a short-circuit accident of the sub-battery 3 at the time of collision of the automobile can be lessened.

The switching relay 9 is fixed to a position between the main battery 2 and the sub-battery 3. Hence, a distance between the main battery 2 and the switching relay 9 and a distance between the sub-battery 3 and the switching relay 9 become shorter, which also contributes to shorter wiring. Further, since the switching relay 9 is situated between the main battery 2 and the sub-battery 3, the possibility of the plus terminal 21 of the main battery 2 contacting the plus terminal 31 of the sub-battery 3 can be reduced. Consequently, the possibility of occurrence of a short-circuit accident of the sub-battery 3 at the time of collision of the automobile can be reduced.

Of the main battery 2 and the sub-battery 3, the light-weight, compact sub-battery 3 is placed on the side member 12 that is situated on the front side of the vehicle than is the main battery 2. Hence, a freedom degree of layout can be acquired in the engine room 11 with the forwardly down-sloped engine hood.

According to the invention, the plus terminal of the first battery and the plus terminal of the second battery are situated on the center side with respect to the widthwise direction of the vehicle. Consequently, even if the automobile undergoes lateral collision, the possibility of the plus terminals contacting the vehicle body can be reduced. In addition, the plus terminal of the first battery is placed on the top surface of the first battery, and the plus terminal of the second battery is placed on the lateral surface of the second battery. Hence, the plus terminal of the first battery and the plus terminal of the second battery are oriented in different directions. Even if the second battery runs over the first battery, the possibility of the plus terminal of the second battery contacting the minus terminal of the first battery and the possibility of the minus terminal of the second battery contacting the plus terminal of the first battery become small. The possibility of occurrence of a short-circuit accident of the battery at the time of collision of the automobile can thereby be lessened.

According to the invention, even if the second battery runs over the first battery, the possibility of the plus terminal of the second battery contacting the minus terminal of the first battery and the possibility of the minus terminal of the second battery contacting the plus terminal of the first battery become small. The possibility of occurrence of a short-circuit accident of the battery at the time of collision of the automobile can be reduced. Accordingly, the invention is suitable for a vehicle battery fixing structure by means of which the first battery and the second battery are placed side by side within an engine room with respect to the front-back direction of the automobile.

### Industrial Applicability

In the invention, vibrations, such as engine vibrations, travel to the first battery and the second battery nearly in the same way. Since shaking of the two batteries can thereby be dampened, the present invention is suitable for the vehicle battery fixing structure by means of which two batteries are fixed side by side.

### Reference Signs List

- 1: AUTOMOBILE
- 11: ENGINE ROOM
- 12: SIDE MEMBER (VEHICLE BODY CONSTITUENT COMPONENT)
- 2: MAIN BATTERY (FIRST BATTERY)
- 21: PLUS TERMINAL
- 22: MINUS TERMINAL
- 3: SUB-BATTERY (SECOND BATTERY)
- 31: PLUS TERMINAL
- 32: MINUS TERMINAL
- 33: CONNECTION TERMINAL
- 4: BATTERY PAN
- 41: SIDE MEMBER FIXING FITTING
- 42: BATTERY MOUNTING PART
- 43: SUB-BATTERY FIXING PART
- 44: SUB-BATTERY RECEIVING PART
- 45: RELAY FIXING PART
- 46: HARNESS FIXING PART
- 47: BACK PLATE PART
- 471: ENGAGEMENT PART
- 5: RELAY BRACKET
- 51: FIXING PART
- 52: UPRIGHT PART
- 53: SUPPORT PART
- 55: WELD BOLT
- 6: BATTERY BRACKET
- 61: BASE PLATE
- 611: PLATE-SHAPED PART
- 612: FLANGE
- 62: FIXING PLATE
- 621: BONDED PART
- 622: FIXING PART (INSERT PART)
- 7: HARNESS BRACKET
- 71: FIXING PART
- 72: UPRIGHT PART
- 73: HARNESS CLIP
- 8: BATTERY HOLDER
- 81: HOLDER
- 82: GUIDE
- 83: L BOLT
- 9: SWITCHING RELAY

## Claims

1. A vehicle (1) comprising two batteries (2, 3) and a vehicle battery fixing structure, said vehicle battery fixing structure comprising:
a battery pan (4) attached to a vehicle body constituent component (12) of a vehicle body;
the first battery (2) mounted on the battery pan (4);
the second battery (3) placed on the battery pan (4) and side by side with the first battery (2) at a vehicle front side of the fist battery (2); and
a battery bracket (6) on a back surface of the second battery (3) that includes an insert part (622) that is provided between a top surface of the battery pan (4) and a bottom surface of the first battery (2),
**characterized in that**
the battery bracket (6) is placed on a back surface of the second battery (3) as to cover an entirety of the back surface.

2. The vehicle (1) according to the claim 1,
wherein a weight of the second battery (3) is lighter than a weight of the first battery (2).

3. The vehicle (1) according to the claim 1 or 2,
wherein the battery pan (4) includes:
a battery mounting part (42) on which the first battery (2) is mounted; and
a bracket fixing part (43) that is disposed lower than the battery mounting part (42) and to which the battery bracket (6) is fixed.

4. The vehicle (1) according to the claim 3,
wherein the battery pan (4) includes a receiving part (44) that is disposed lower than the bracket fixing part (43) and that receives a lower end part of the second battery (3).

5. The vehicle (1) according to any one of the claims 1 to 4, further comprising a bracket (5) placed at a right angle to the battery bracket (6),
wherein the bracket (5) includes:
a fixing part (51) that is fixed to the top surface of the battery pan (4) and that is provided between the top surface of the battery pan (4) and the bottom surface of the first battery (2); and
a support part (53) that is joined to a flange (612) provided on the battery bracket (6) to support the battery bracket (6).

6. The vehicle (1) according to the claim 5,
wherein the bracket (5) is a relay bracket (5) which is attached with a switching relay (9) configured to open and close a connection of the first battery (2) and configured to open and close a connection of the second battery (3).

7. The vehicle (1) according to any one of the claims 1 to 6, further comprising
a harness bracket (7) which includes a fixing part (71) fixed to the top surface of the battery pan (4) and provided between the top surface of the battery pan (4) and the bottom surface of the first battery (2).

8. The vehicle (1) according to any one of the claims 1 to 7,
wherein a minus terminal (22) and a plus terminal (21) of the first battery (2) are laid rightward or leftward on the top surface of the first battery (2) with respect to a center line of the vehicle (1) in a widthwise direction of the vehicle (1),
the plus terminal (21) of the first battery (2) is placed close to the center line than is the minus terminal (22) of the first battery (2) in the widthwise direction,
lateral surfaces of the second battery (3) are placed rightward or leftward with respect to the center line of the vehicle (1), and
a minus terminal (32) and a plus terminal (31) of the second battery (3) are placed on one of the lateral surfaces of the second battery (3) disposed at a side of the center line in the widthwise direction.

9. The vehicle (1) according to the claim 8,
wherein the plus terminal (31) of the second battery (3) is provided in an upper portion of the one of the lateral surface disposed at the side of the center line in the widthwise direction.

10. The vehicle (1) according to the claim 8 or 9,
wherein the switching relay (9) is fixed to a position between the first battery (2) and the second battery (3).

## Patentansprüche

1. Fahrzeug (1), das zwei Batterien (2, 3) und eine Fahrzeugbatterie-Befestigungsstruktur aufweist, wobei die Fahrzeugbatterie-Befestigungsstruktur aufweist:
eine Batterieschale (4), die an einer Fahrzeugkarosserie-Aufbaukomponente (12) einer Fahrzeugkarosserie angebracht ist;
die erste Batterie (2), die auf der Batterieschale (4) angebaut ist;
die zweite Batterie (3), die auf der Batterieschale (4) und Seite an Seite mit der ersten Batterie (2) an einer Fahrzeugvorderseite der ersten Batterie (2) platziert ist; und eine Batteriehalterung (6) auf einer Rückseite der zweiten Batterie (3), die ein Einsatzteil (622) aufweist, das zwischen einer Oberseite der Batterieschale (4) und einer Unterseite der ersten Batterie (2) vorgesehen ist,
**dadurch gekennzeichnet, dass**
die Batteriehalterung (6) auf einer Rückseite der zweiten Batterie (3) so platziert ist, dass sie die gesamte Rückseite abdeckt.

2. Fahrzeug (1) nach Anspruch 1,
wobei ein Gewicht der zweiten Batterie (3) leichter als ein Gewicht der ersten Batterie (2) ist.

3. Fahrzeug (1) nach Anspruch 1 oder 2,
wobei die Batterieschale (4) aufweist:
ein Batterieanbauteil (42), auf dem die erste Batterie (2) angebaut ist; und
ein Halterungsbefestigungsteil (43), das tiefer als das Batterieanbauteil (42) angeordnet ist und an dem die Batteriehalterung (6) befestigt ist.

4. Fahrzeug (1) nach Anspruch 3,
wobei die Batterieschale (4) ein Aufnahmeteil (44) aufweist, das tiefer als das Halterungsbefestigungsteil (43) angeordnet ist und das ein unteres Endteil der zweiten Batterie (3) aufnimmt.

5. Fahrzeug (1) nach einem der Ansprüche 1 bis 4, das ferner aufweist:
eine Halterung (5), die rechtwinklig zur Batteriehalterung (6) platziert ist,
wobei die Halterung (5) aufweist:
ein Befestigungsteil (51), das an der Oberseite der Batterieschale (4) befestigt ist und das zwischen der Oberseite der Batterieschale (4) und der Unterseite der ersten Batterie (2) vorgesehen ist; und
ein Stützteil (53), das mit einem Flansch (612) zusammengefügt ist, der an der Batteriehalterung (6) vorgesehen ist, um die Batteriehalterung (6) zu stützen.

6. Fahrzeug (1) nach Anspruch 5,
wobei die Halterung (5) eine Relaishalterung (5) ist, an der ein Schaltrelais (9) angebracht ist, das so konfiguriert ist, dass es eine Verbindung der ersten Batterie (2) öffnet und schließt, und das so konfiguriert ist, dass es eine Verbindung der zweiten Batterie (3) öffnet und schließt.

7. Fahrzeug (1) nach einem der Ansprüche 1 bis 6, das ferner aufweist:
eine Kabelbaumhalterung (7), die ein Befestigungsteil (71) aufweist, das an der Oberseite der Batterieschale (4) befestigt und zwischen der Oberseite der Batterieschale (4) und der Unterseite der ersten Batterie (2) vorgesehen ist.

8. Fahrzeug (1) nach einem der Ansprüche 1 bis 7,
wobei ein Minuspol (22) und ein Pluspol (21) der ersten Batterie (2) rechts oder links auf der Oberseite der ersten Batterie (2) im Hinblick auf eine Mittellinie des Fahrzeugs (1) in Breitenrichtung des Fahrzeugs (1) verlegt sind,
der Pluspol (21) der ersten Batterie (2) in Breitenrichtung näher an der Mittellinie als der Minuspol (22) der ersten Batterie (2) platziert ist,
Seitenflächen der zweiten Batterie (3) rechts oder links im Hinblick auf die Mittellinie des Fahrzeugs (1) platziert sind, und
ein Minuspol (32) und ein Pluspol (31) der zweiten Batterie (3) auf einer der Seitenflächen der zweiten Batterie (3) platziert sind, die an einer Seite der Mittellinie in Breitenrichtung angeordnet ist.

9. Fahrzeug (1) nach Anspruch 8,
wobei der Pluspol (31) der zweiten Batterie (3) in einem oberen Abschnitt der einen der Seitenflächen vorgesehen ist, die an der Seite der Mittellinie in Breitenrichtung angeordnet ist.

10. Fahrzeug (1) nach Anspruch 8 oder 9,
wobei das Schaltrelais (9) an einer Position zwischen der ersten Batterie (2) und der zweiten Batterie (3) befestigt ist.

## Revendications

1. Véhicule (1) comprenant deux batteries (2, 3) et une structure de fixation de batterie de véhicule, ladite structure de fixation de batterie de véhicule comprenant :
un plateau (4) de batterie fixé sur un composant de carrosserie (12) de la caisse du véhicule ;
la première batterie (2) montée sur le plateau (4) de batterie ;
la deuxième batterie (3) disposée sur le plateau (4) de batterie et juxtaposée à la première batterie (2) sur le devant de la première batterie (2), par rapport au véhicule ; et
un support (6) de batterie sur une surface arrière de la deuxième batterie (3), comportant une pièce d'insertion (622) prévue entre une surface supérieure du plateau (4) de batterie et une surface de base de la première batterie (2),
**caractérisé en ce que**
le support (6) de batterie est disposé sur une surface arrière de la deuxième batterie (3) de manière à couvrir la totalité de la surface arrière.

2. Véhicule (1) selon la revendication 1,
où le poids de la deuxième batterie (3) est inférieur au poids de la première batterie (2).

3. Véhicule (1) selon la revendication 1 ou la revendication 2,
où le plateau (4) de batterie comporte :
une pièce de montage (42) de batterie sur laquelle la première batterie (2) est montée ; et
une pièce de fixation (43) de support disposée en dessous de la pièce de montage (42) de batterie et sur laquelle est fixé le support (6) de batterie.

4. Véhicule (1) selon la revendication 3,
où le plateau (4) de batterie comporte une pièce de réception (44) disposée en dessous de la pièce de fixation (43) de support et recevant une partie d'extrémité inférieure de la deuxième batterie (3).

5. Véhicule (1) selon l'une des revendications 1 à 4, comprenant en outre une console (5) disposé perpendiculairement au support (6) de batterie,
ladite console (5) comportant :
une pièce de fixation (51) fixée sur la surface supérieure du plateau de batterie (4) et
prévue entre la surface supérieure du plateau (4) de batterie et la surface de base de la première batterie (2) ; et
une pièce de maintien (53) raccordée à une bride (612) prévue sur le support (6) de batterie pour maintenir le support (6) de batterie.

6. Véhicule (1) selon la revendication 5,
où la console (5) est une console à relais (5) qui est fixée avec un relais de commutation (9) prévu pour ouvrir et fermer une connexion de la première batterie (2) et pour ouvrir et fermer une connexion de la deuxième batterie (3).

7. Véhicule (1) selon l'une des revendications 1 à 6, comprenant en outre une console à harnais (7) comportant une pièce de fixation (71) fixée sur la surface supérieure du plateau (4) de batterie et prévue entre la surface supérieure du plateau (4) de batterie et la surface de base de la première batterie (2).

8. Véhicule (1) selon l'une des revendications 1 à 7,
où un pôle moins (22) et un pôle plus (21) de la première batterie (2) sont placés à droite ou à gauche sur la surface supérieure de la première batterie (2) par rapport à une ligne médiane du véhicule (1) dans le sens de la largeur du véhicule (1),
le pôle plus (21) de la première batterie (2) est placé à proximité de la ligne médiane qui est le pôle moins (22) de la première batterie (2) dans le sens de la largeur,
les surfaces latérales de la deuxième batterie (3) sont placées à droite ou à gauche par rapport à la ligne médiane du véhicule (1), et
un pôle moins (32) et un pôle plus (31) de la deuxième batterie (3) sont placés sur une des surfaces latérales de la deuxième batterie (3) disposée sur un côté de la ligne médiane dans le sens de la largeur.

9. Véhicule (1) selon la revendication 8,
où le pôle plus (31) de la deuxième batterie (3) est prévu sur une partie supérieure de l'une des surfaces latérales qui est disposée sur le côté de la ligne médiane dans le sens de la largeur.

10. Véhicule (1) selon la revendication 8 ou la revendication 9,
où le relais de commutation (9) est fixé à un emplacement entre la première batterie (2) et la deuxième batterie (3).
